# EUROPÄISCHE PATENTANMELDUNG

(11) **EP 1 079 288 A2**
(43) Veröffentlichungstag der Anmeldung: **28.02.2001**
(21) Anmeldenummer: 00117589.2
(22) Anmeldetag: 16.08.2000
(51) Int. Cl.: G05B 19/042

(54) **Verfahren und Vorrichtung zum Steuern eines elektrischen Gerätes, insbesondere eines Schrittmotors**

(30) Priorität: 27.08.1999 DE 19940680
(71) Anmelder: Wincor Nixdorf GmbH & Co KG, 33106 Paderborn (DE)
(72) Erfinder: Büttner, Michael, 10587 Berlin (DE)

(57) **Zusammenfassung**

Beschrieben wird ein Verfahren sowie eine Einrichtung zum Steuern eines elektrischen Gerätes (12), bei dem der Zählerstand eines Zählers (Z) in konstanten Zeitabständen um einen ersten Betrag (K1) erhöht oder vermindert wird, wenn sich das elektrische Gerät (12) im eingeschalteten Zustand befindet, und um einen zweiten Betrag (K2) vermindert oder erhöht wird, wenn sich das elektrische Gerät (12) im ausgeschalteten Zustand befindet. In einem Grenzwertvergleich wird der Zählwert (Z) überprüft, und beim Überschreiten bzw. Unterschreiten oder beim Erreichen des Grenzwertes (OGR) wird das elektrische Gerät (12) durch die Steuerung (18) abgeschaltet.

## Beschreibung

### Technisches Gebiet

Die Erfindung betrifft ein Verfahren zum Steuern eines elektrischen Gerätes, insbesondere eines Schrittmotors, sowie eine Einrichtung zum Durchführen des Verfahrens.

### Stand der Technik

Elektrische Gräte werden oft mit Betriebsparametern oberhalb ihrer Dauerbelastbarkeit betrieben. Es wird davon ausgegangen, daß sie nur im Kurzzeitbetrieb eingesetzt werden. Solche elektrischen Geräte sind z.B. Schrittmotoren, Spulen, Hupen sowie Motoren. Diese elektrischen Geräte werden z.B. für Positionieraufgaben in Werkzeugmaschinen, in Einrichtungen der Informationstechnik sowie in Einrichtungen der Rechentechnik eingesetzt. Die Ansteuerung der elektrischen Geräte erfolgt durch eine Steuereinheit, als deren zentrale Einheit ein Prozessor bzw. ein Mikrocontroller eingesetzt wird.

Beim Einsatz von elektrischen Geräten ohne Temperatursensor mit definierter maximaler Einschaltzeit und definierter minimaler Ausschaltzeit ist davon auszugehen, daß bei entsprechender Dimensionierung des elektrischen Gerätes eine Steuerung zum Schutz vor thermischer Zerstörung nicht erforderlich ist. In anderen Einsatzfällen ist die maximale Einschaltzeit und/oder minimale Ausschaltzeit des elektrischen Gerätes nicht definiert, z.B. bei Einsatzfällen, in denen die Einschaltzeit des elektrischen Verbrauchers durch Bedienpersonal oder durch externe Bedingungen festgelegt wird. Das ist z.B. bei Kassendruckern der Fall, wenn das Bedienpersonal den Papiervorschub permanent aktiviert, so daß der Schrittmotor zum Antrieb der Papierrolle für den Kassenbon in Dauerbetrieb geschaltet wird. Im Normalbetrieb ist dieser Schrittmotor nur kurzzeitig zum Zeilenvorschub im eingeschalteten Zustand. Während der Zeit, in der der Druckvorgang stattfindet, ist der Schrittmotor im ausgeschalteten Zustand.

Der Schutz der elektrischen Geräte erfolgt in den Fällen, in denen sie mit Betriebsparametern oberhalb ihrer Dauerbelastbarkeit betrieben werden, meist nur unzureichend über eine Sicherung, die den Kurzschlußschutz gewährleistet, nicht aber den Schutz des elektrischen Gerätes vor thermischer Zerstörung. Besonders bei kleinen elektrischen Geräten ist die Erfassung und Auswertung der aufgenommenen Leistung für jedes einzelne Gerät aufwendig und kostenintensiv. Ein Schutz des elektrischen Gerätes durch Installation eines Temperatursensors im Gerät ist nicht möglich, da die Geräte in den meisten Fällen ohne Temperatursensor hergestellt werden.

Aufgabe der Erfindung ist es, ein Verfahren und eine Einrichtung anzugeben, das bzw. die das elektrische Gerät ohne Temperatursensor steuert und dennoch ausreichend vor thermischer Zerstörung schützt.

### Darstellung der Erfindung

Die Aufgabe wird für ein Verfahren durch die Merkmale des Anspruchs 1 gelöst. Vorteilhafte Ausgestaltungen der Erfindung sind in den abhängigen Ansprüchen angegeben.

Die Erfindung betrifft elektrische Geräte, die über eine Steuerung, z.B. einen Prozessor mit einer Steuersoftware, verfügen. Um einen Schutz dieser elektrischen Geräte zu gewährleisten, erfolgt die Ansteuerung der elektrischen Geräte durch die Steuerung, die den Zählerstand eines Zählers in konstanten Zeitabständen um einen ersten Betrag erhöht oder vermindert, wenn sich das elektrische Gerät im eingeschalteten Zustand befindet. Wenn sich das elektrische Gerät im ausgeschalteten Zustand befindet, vermindert oder erhöht die Steuerung in konstanten Zeitabständen den Zählerstand des Zählers um einen zweiten Betrag. Befindet sich das elektrische Gerät im eingeschalteten Zustand, so wird es durch die eigene Verlustleistung erwärmt. Der erste Betrag, um den der Zählwert eines Zählers erhöht oder erniedrigt wird, ist somit ein Maß der Erwärmung des elektrischen Gerätes. Befindet sich das elektrische Gerät im ausgeschalteten Zustand gibt es Wärme an die Umgebung ab. Der zweite Betrag, um den der Zählwert eines Zählers erniedrigt oder erhöht wird, ist somit ein Maß für die Abkühlung des elektrischen Gerätes.

Überschreitet bzw. unterschreitet oder erreicht der Zählwert einen ersten oberen Grenzwert oder einen ersten unteren Grenzwert, so verhindert die Steuersoftware das weitere Einschalten des elektrischen Gerätes. Der erste obere Grenzwert oder der erste untere Grenzwert bezieht sich auf einen Grenzwert der zulässigen zerstörungsfreien Temperatur unter kritischen Betriebsbsdingungen.

Der erste Betrag, der zweite Betrag und der erste obere Grenzwert oder der erste untere Grenzwert werden für jedes elektrische Gerät in einem Einmeßvorgang individuell ermittelt. Durch das Einmessen unter realen Betriebsbedingungen ist eine aufwendige Simulation der gesamten Einrichtung nicht notwendig.

Eine vorteilhafte Ausführungsform der Erfindung ist, daß nach einer Abkühlzeit die Steuersoftware das Zuschalten des elektrischen Gerätes automatisch wieder gestattet. Dadurch wird erreicht, daß das elektrische Gerät ohne Fremdeingriff nach der Abkühlzeit wieder betriebsbereit ist.

Eine weitere Ausführungsform der Erfindung besteht darin, daß das Zuschalten des elektrischen Gerätes erst nachdem der Zählwert einen zweiten Grenzwert erreicht oder unterschritten bzw. überschritten hat, wieder gestattet wird. Durch diese Maßnahme wird erreicht, daß das Zuschalten erst wieder gestattet wird, wenn genügend Wärme vom elektrischen Gerät abgegeben wurde bzw. wenn das elektrische Gerät genügend abgekühlt ist.

Eine andere bevorzugte Ausführungsform der Erfindung besteht darin, die Genauigkeit der Überwachung durch eine Anpassung des ersten Betrags und des zweiten Betrags in Abhängigkeit vom Zählwert des Zählers zu erhöhen. Die Erwärmung und die Abkühlung sind im allgemeinen keine linearen Funktionen.

Eine weitere bevorzugte Ausführungsform der Erfindung besteht darin, die Genauigkeit der Überwachung durch eine Anpassung des ersten Betrags und des zweiten Betrags in Abhängigkeit der Umgebungstemperatur des elektrischen Gerätes vorzunehmen. Dies erfordert zwar einen Temperatursensor in der Nähe des elektrischen Gerätes, jedoch ist die Installation des Temperatursensors einfacher zu realisieren, als das Nachrüsten eines Temperatursensors im Gerät. Auch wird nur ein Temperatursensor benötigt, wenn sich mehrere elektrische Geräte in einem Gehäuse befinden.

Gemäß einem weiteren Aspekt der Erfindung wird eine Einrichtung zum Steuern eines elektrischen Gerätes mit dem Merkmalen des Anspruchs 12 angegeben. Die Einrichtung erfaßt mit einer Steuerung in konstanten Zeitabständen den eingeschalteten Zustand des elektrischen Gerätes durch Erhöhung bzw. Verminderung des Zählwertes eines Zählers um einen ersten Betrag. Weiterhin wird durch die Steuerung der Einrichtung in konstanten Zeitabständen der ausgeschaltete Zustand des elektrischen Gerätes durch Verminderung oder Erhöhung des Zählwertes des Zählers um einen zweiten Betrag erfaßt. In einem Grenzwertvergleich wird der Zählwert überprüft. Bei Überschreitung bzw. Unterschreitung oder bei Erreichen eines ersten Grenzwertes wird das elektrische Gerät durch die Steuerung der Einrichtung abgeschaltet.

Weitere Merkmale und Vorteile der Erfindung ergeben sich aus der folgenden Beschreibung, welche in Verbindung mit den beigefügten Zeichnungen die Erfindung anhand eines Ausführungsbeispiels erläutert.

### Kurzbeschreibung der Zeichnungen

Es zeigen
- Fig. 1: den schematischen Aufbau eines Druckers, in dem ein Schrittmotor als Antrieb einer Papierantriebswalze dient,
- Fig. 2: das Verfahren zur Erfassung der ein- und ausgeschalteten Zustände des Schrittmotors und Abschaltung des Schrittmotors für eine konstante Zeit bei Überschreitung des zulässigen oberen Grenzwertes anhand eines Flußdiagramms,
- Fig. 3: das Verfahren zur Erfassung der ein- und ausgeschalteten Zustände des Schrittmotors und Abschaltung des Schrittmotors bei Überschreitung eines oberen Grenzwertes und Freigabe des weiteren Betriebs beim Unterschreiten eines unteren Grenzwertes anhand eines Flußdiagramms,
- Fig. 4: die schematische Erwärmungskennlinie eines Schrittmotors bei Dauerbetrieb zum Anpassen des ersten Betrags bei eingeschaltetem Schrittmotor, und
- Fig. 5: die schematische Abkühlungskennlinie eines Schrittmotors bei Stillstand zum Anpassen des zweiten Betrags bei ausgeschaltetem Schrittmotor.

### Beschreibung einer Ausführungsform der Erfindung

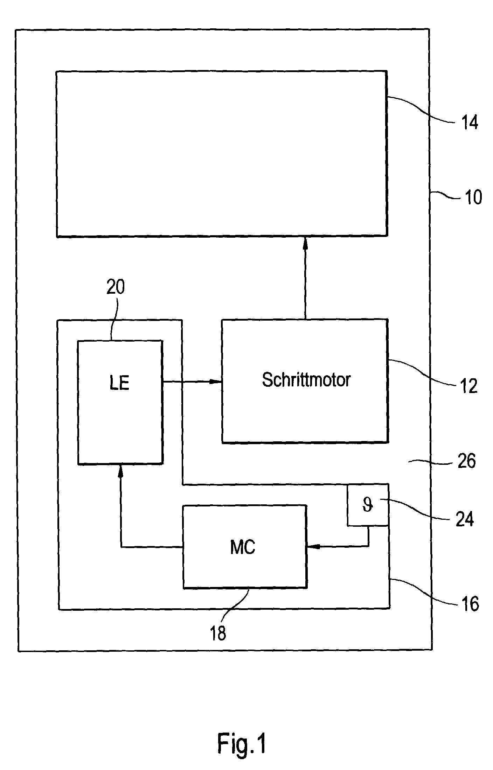

Figur 1 zeigt den prinzipiellen Aufbau eines Druckers mit einem Schrittmotor 12 und mit einer Papierantriebswalze 14. Zur Ansteuerung des Schrittmotors 12 sind elektronische Bauelemente auf einer Leiterplatte 16 angeordnet. Als zentrales Bauteil fungiert dabei ein Mikrocontroller 18. Ein Temperatursensor 24 zum Erfassen der Gehäuseinnentemperatur 26 ist mit einem Eingang des Mikrocontrollers 18 verbunden. Der Mikrocontroller 18 übergibt der Leistungselektronikbaugruppe 20 Steuerimpulse, die durch die Leistungselektronikbaugruppe 20 verstärkt und dem Schrittmotor 12 zugeführt werden. Der Schrittmotor 12 treibt die Papierantriebswalze 14 des Druckers an. Dabei kann der Schrittmotor 12 und die Papierantriebswalze 14 in einem gemeinsamen Gehäuse 10 mit der Leiterplatte 16 zur Ansteuerung des Schrittmotors 12 oder in einem separaten Gehäuse untergebracht sein. Die Gehäuseinnentemperatur 26 wird durch den Temperatursensor 24 zum Anpassen des ersten Betrags K1 und des zweiten Betrags K2 mit erfaßt, wie weiter unten noch erläutert wird. Vorteilhaft ist die Anordnung des Temperatursensors 24 auf der Leiterplatte 16, da dies den geringsten Fertigungsaufwand erfordert. Es sollte jedoch darauf geachtet werden, daß die Gehäuseinnentemperatur 26 an dieser Stelle nicht durch andere Bauteile oder durch Gehäuseöffnungen verfälscht wird.

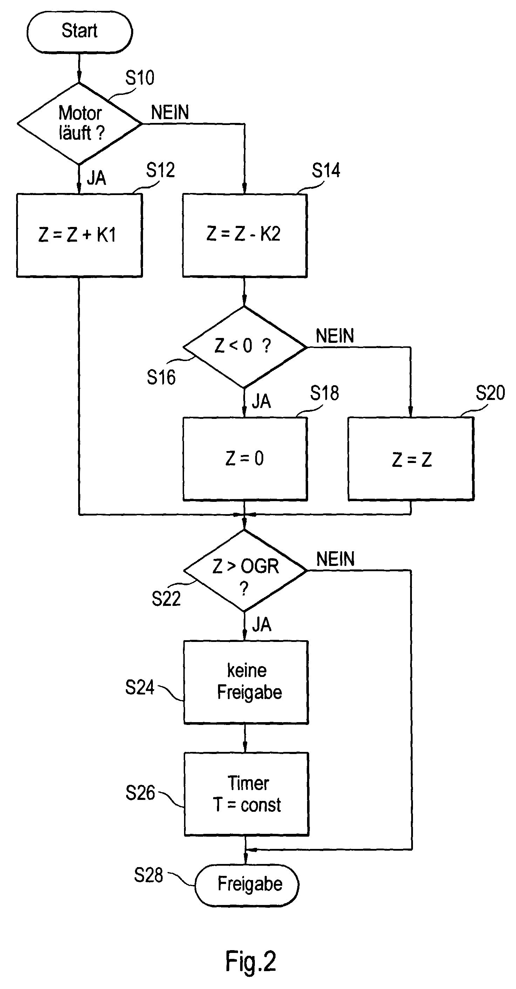

Figur 2 zeigt den Ablauf zur Erfassung der ein- und ausgeschalteten Zustände des Schrittmotors 12 und zur Abschaltung des Schrittmotors 12 für eine konstante Zeit T bei Überschreitung des zulässigen oberen Grenzwertes OGR. Der Schrittmotor 12 wird mit Steuerimpulsen durch den Mikrocontroller 18 versorgt, die ein Impulsgenerator erzeugt. Aus den vom Impulsgenerator erzeugten Impulsen werden auch Startimpulse zum Aufruf bzw. zum Start des Unterprogramms zur Erfassung der ein- und ausgeschalteten Zustände des Schrittmotors 12 und zur Abschaltung des Schrittmotors 12 bei Überschreitung eines oberen Grenzwertes OGR abgeleitet. Im gezeigten Flußdiagramm wird der Zählwert des Zählers Z bei Erwärmung bzw. bei eingeschaltetem Schrittmotor 12 um einen ersten Betrag K1 erhöht und bei Abkühlung bzw. bei Stillstand des Schrittmotors 12 um einen zweiten Betrag K2 vermindert. Die Abschaltung des Schrittmotors 12 erfolgt beim Überschreiten eines oberen Grenzwertes OGR. Beim Überschreiten des oberen Grenzwertes OGR hat der Schrittmotor 12 eine so hohe Temperatur erreicht, daß bei einer weiteren Erhöhung der Temperatur die Zerstörung des Schrittmotors 12 möglich ist. Der dargestellte Ablauf gilt analog auch für den Fall, daß der Zählwert des Zählers Z im eingeschalteten Zustand des Schrittmotors 12 um den ersten Betrag K1 verringert wird und im ausgeschalteten Zustand um den zweiten Betrag K2 erhöht wird, sowie der Grenzwertvergleich mit einem unteren Grenzwert UGR durchgeführt wird.

Im Schritt S10 wird überprüft, ob der Schrittmotor 12 angesteuert wird. Ist das der Fall, so wird der Zählwert des Zählers Z um den ersten Betrag K1 im Schritt S12 erhöht. Der Zählwert des Zählers Z gibt indirekt die Innentemperatur des Schrittmotors 12 an. Wird der Schrittmotor 12 zum Zeitpunkt der Abfrage nicht angesteuert, so wird vom Zählwert des Zählers Z um den zweiten Betrag K2 im Schritt S14 verringert. Das bedeutet, daß die Temperatur des Schrittmotors in der Abkühlphase sinkt. Im Schritt S16 wird überprüft, ob der Zählwert des Zählers Z negativ geworden ist. Ist das der Fall, so wird im Schritt S18 der Zählwert des Zählers Z auf null korrigiert. Andernfalls wird der Zählwert Z im Schritt S20 beibehalten.

Im Schritt S22 wird überprüft, ob nach der Erhöhung um den ersten Betrag K1 oder nach der Verringerung um den zweiten Betrag K2 der Zählwert des Zählers Z den oberen Grenzwert OGR überschritten hat. Wenn der obere Grenzwert OGR überschritten ist, wird im Schritt S24 die Ausgabe von Steuerimpulsen an den Schrittmotor 12 gestoppt und im Schritt S26 ein Zeitglied T mit einer festen Zeit gestartet. In dieser Zeit wird der Schrittmotor 12 durch das Steuerprogramm des Mikrocontrollers 18 nicht angesteuert. Der Aufruf des Unterprogramms erfolgt weiterhin zeitgesteuert, um auch während der Laufzeit des Zeitgliedes T die Abkühlung des Schrittmotors 12 durch Verringerung des Zählwertes des Zählers Z um den zweiten Betrag K2 zu erfassen. Nach Ablauf der Zeit des Zeitgliedes T wird im Schritt S28 die Ausgabe von Steuerimpulsen an den Schrittmotor 12 wieder gestattet. Der Schrittmotor 12 kann je nach Erfordernis wieder angesteuert werden. Für den Drucker bedeutet dies, daß es bei einem durch den Bediener dauerhaft eingeschalteten Papiervorschub zu einer Überschreitung der zulässigen Temperatur des Schrittmotors 12 durch Überschreiten des oberen Grenzwertes OGR kommt. Die Steuerung 18 stoppt den Schrittmotor 12 für eine feste Zeit T, um den Schrittmotor 12 wieder abkühlen zu lassen. Nach dieser Abkühlzeit T wird der Papiervorschub automatisch fortgesetzt, wenn der Papievorschub weiterhin eingeschaltet ist.

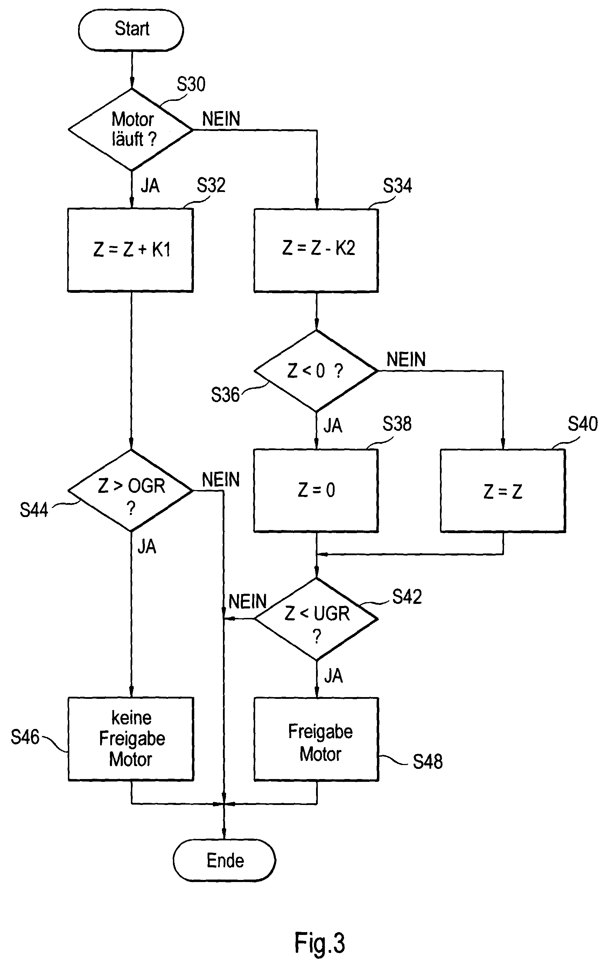

Figur 3 zeigt in einer zweiten Variante, alternativ zu Figur 2, den Ablauf zur Erfassung der ein- und ausgeschalteten Zustände des Schrittmotors 12 und Abschaltung des Schrittmotors 12 bei Überschreitung eines oberen Grenzwertes OGR und Freigabe des weiteren Betriebs beim Unterschreiten eines unteren Grenzwertes UGR.

Das Unterprogramm zur Erfassung der ein- und ausgeschalteten Zustände des Schrittmotors 12 und zur Abschaltung des Schrittmotors 12 bei Überschreitung des oberen Grenzwertes OGR wird in konstanten Zeitabständen gekoppelt mit dem Impulsgenerator der Schrittmotoransteuerung aufgerufen.

Im Schritt S30 wird überprüft, ob der Schrittmotor 12 angesteuert wird. Ist das der Fall, so wird der Zählwert des Zählers Z um den ersten Betrag K1 im Schritt S32 erhöht. Es wird im Schritt S44 überprüft, ob nach dieser Erhöhung der Zählwert des Zählers Z den oberen Grezwert OGR überschritten hat. Bei Überschreitung des oberen Grenzwertes OGR wird im Schritt S46 die Ausgabe von Steuerimpulsen an den Schrittmotor 12 gestoppt, und dieses Unterprogramm wird bis zum nächsten zeitgesteuerten Aufruf beendet. Wird der obere Grenzwert OGR nicht überschritten, so wird dieses Unterprogramm ebenfalls bis zum nächsten Aufruf beendet.

Erfolgt zum Zeitpunkt der Prüfung im Schritt S30 keine Ansteuerung des Schrittmotors 12, so wird der Zählwert des Zählers Z um den zweiten Betrag K2 im Schritt S34 vermindert. Im Schritt S36 wird anschließend überprüft, ob der Zählwert des Zählers Z negativ geworden ist. Ist der Zählwert Z negativ geworden, so wird im Schritt S38 der Zählwert des Zählers Z auf null korrigiert, andernfalls wird der Zählwert des Zählers Z im Schritt S40 beibehalten.

Im folgenden Schritt S42 wird überprüft, ob nach der Verminderung des Zählwertes Z um den zweiten Betrag K2 der Zählwert des Zählers Z den unteren Grenzwert UGR unterschritten hat. Wenn der untere Grenzwert UGR unterschritten ist, wird im Schritt S46 die Ausgabe von Steuerimpulsen an den Schrittmotor 12 freigegeben, und dieses Unterprogramm wird bis zum nächsten zeitgesteuerten Aufruf beendet. Wird der untere Grenzwert UGR nicht unterschritten, so wird dieses Unterprogramm ohne Freigabe des Schrittmotors 12 beendet. Der untere Grenzwert UGR stellt die Grenze dar, an der der Schrittmotor 12 so weit abgekühlt ist, daß es sinnvoll ist, den Schrittmotor 12 wieder zuzuschalten, ohne nach dem Wiederzuschalten den oberen Grenzwert OGR sofort wieder zu überschreiten.

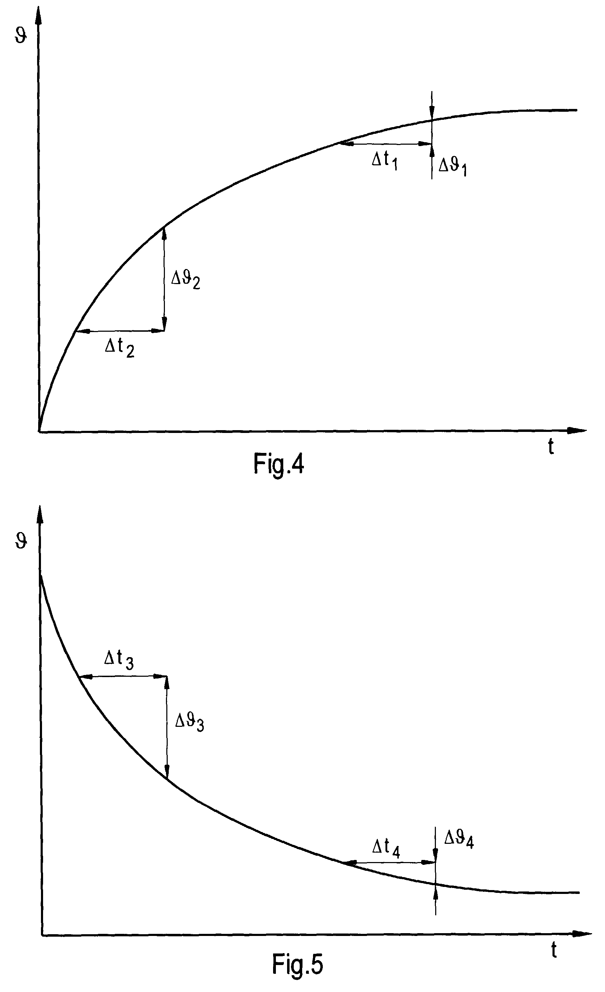

Figur 4 zeigt die Erwärmungskennlinie eines Schrittmotors 12 bei Dauerbetrieb und konstanter mechanischer Belastung. Anhand dieser Kennlinie ist zu erkennen, daß es durch die Nichtlinearität der Erwärmungskennlinie erforderlich ist, den ersten Betrag K1 anhand der im Mikrocontroller 18 hinterlegten Kennlinie in Abhängigkeit des Zählwertes des Zählers Z anzupassen.

Die Zeit t ist auf der Abszissenachse und die Temperatur ϑ auf der Ordinatenachse aufgetragen. Durch die konstanten Aufrufintervalle ist die Änderung des Abszissenwertes Δt konstant. Die Änderung des Ordinatenwertes Δϑ ist bei konstanter Zeitänderung unterschiedlich. Das verdeutlichen die beiden eingezeichneten Beispiele mit Δt₁ / Δϑ₁ und Δt₂ / Δϑ₂. Falls der erste Betrag K1 nicht an die Erwärmungskennlinie angepaßt wird, treten Abweichungen zwischen der dem Zählwert des Zählers Z aquivalenten Temperatur und der tatsächlichen Temperatur des Schrittmotors 12 auf. Der Wert des ersten Betrags K1 wird ständig in einem Programmteil des Steuerprogramms des Mikrocontrollers 18 anhand der Gehäuseinnentemperatur 26, der Erwärmungskennline und des Zählwertes des Zählers Z neu berechnet. Die Erwärmungskennlinie muß für jeden Schrittmotor 12 in einem Einmeßvorgang ermittelt werden.

Figur 5 zeigt die Abkühlungskennlinie eines Schrittmotors 12 im nicht angesteuerten Zustand. Die Zeit t ist auf der Abszissenachse und die Temperatur ϑ auf der Ordinatenachse angetragen. Die beiden eingezeichneten Beispiele mit Δt₃ / Δϑ₃ und Δt₄ / Δϑ₄ verdeutlichen, daß bei konstanter Änderung des Abszissenwertes Δt die Änderung des Ordinatenwertes Δϑ unterschiedlich ist. Dieser Unterschied macht es erforderlich, den zweiten Betrag K2 in einem separaten Programmteil des Steuerprogramms des Mikrocontrollers 18 in Abhängigkeit der Gehäuseinnentemperatur 26, der Abkühlungskennlinie des Schrittmotors 12 und des Zählwertes des Zählers Z ständig neu zu berechnen. Durch diese Berechnung ist gewährleistet, daß die zum Zählwert des Zählers Z äquivalente Temperatur des Schrittmotors 12 mit der tatsächlichen Temperatur des Schrittmotors 12 übereinstimmt.

## Patentansprüche

1. Verfahren zum Steuern eines elektrischen Gerätes (12),
bei dem das elektrische Gerät (12) durch eine Steuerung (18) angesteuert wird,
die Steuerung (18) den Zählerstand eines Zählers (Z) in konstanten Zeitabständen um einen ersten Betrag (K1)erhöht oder vermindert, wenn das elektrische Gerät (12) sich im eingeschalteten Zustand befindet,
die Steuerung (18) den Zäherstand eines Zählers Z in konstanten Zeitabständen um einen zweiten Betrag (K2) vermindert oder erhöht, wenn das elektrische Gerät (12) sich im ausgeschalteten Zustand befindet,
und bei dem die Steuerung (18) das elektrische Gerät (12) in den ausgeschalteten Zustand schaltet, wenn der Zählerstand eines Zählers (Z) einen ersten Grenzwert (OGR) erreicht oder überschreitet bzw. unterschreitet.

2. Verfahren nach Anspruch 1, **dadurch gekennzeichnet,** daß die Steuerung (18) einen Prozessor (18) mit Steuersoftware enthält

3. Verfahren nach einem der vorhergehenden Ansprüche, **dadurch gekennzeichnet,** daß die Steuerung (18), nachdem sich das Gerät im ausgeschalteten Zustand befindet, das Wiedereinschalten nach Ablauf eines Zeitgliedes (T) gestattet.

4. Verfahren nach einem der vorhergehenden Ansprüche, **dadurch gekennzeichnet,** daß die Steuerung (18), nachdem sich das Gerät (12) im ausgeschalteten Zustand befindet, das Wiedereinschalten nach Erreichen oder Unterschreiten bzw. Überschreiten eines zweiten Grenzwertes (UGR) gestattet.

5. Verfahren nach einem der vorhergehenden Ansprüche, **dadurch gekennzeichnet,** daß der erste Betrag (K1) und/oder der zweite Betrag (K2), um die der Zählerstand des Zählers (Z) erhöht oder vermindert bzw. vermindert oder erhöht werden, durch die Steuerung (18) angepaßt werden.

6. Verfahren nach Anspruch 5, **dadurch gekennzeichnet,** daß die Anpassung der Beträge (K1, K2) abhängig vom Zählwert des Zählers (Z) erfolgt.

7. Verfahren nach Anspruch 5, **dadurch gekennzeichnet,** daß die Anpassung der Beträge (K1, K2) abhängig vom Wert der Umgebungstemperatur (26) des elektrischen Gerätes (12) erfolgt.

8. Verfahren nach Anspruch 5, **dadurch gekennzeichnet,** daß die Anpassung der Beträge (K1, K2) abhängig vom Wert der Umgebungstemperatur (26) des elektrischen Gerätes (12) und abhängig vom Zählwert des Zählers (Z) erfolgt.

9. Verfahren nach einem der vorhergehenden Ansprüche, **dadurch gekennzeichnet,** daß die Ansteuerung mehrerer elektrischer Geräte (12) in einer Steuerung (18) erfolgt, wobei für jedes elektrische Gerät (12) mindestens ein Zähler (Z) in der Steuerung (18) vorhanden ist.

10. Verfahren nach einem der vorhergehenden Ansprüche, **dadurch gekennzeichnet,** daß das elektrische Gerät ein Schrittmotor (12) ist.

11. Verfahren nach einem der vorhergehenden Ansprüche, **dadurch gekennzeichnet,** daß das elektrische Gerät (12) eine Spule, ein Motor und/oder eine Hupe ist.

12. Einrichtung zum Steuern eines elektrischen Gerätes (12),
bei der das elektrische Gerät (12) durch eine Steuerung (18) angesteuert wird,
die den Zählerstand eines Zählers (Z) in konstanten Zeitabständen um einen ersten Betrag (K1) erhöht oder vermindert, wenn das elektrische Gerät (12) sich im eingeschalteten Zustand befindet,
die den Zählerstand eines Zählers (Z) in konstanten Zeitabständen um einen zweiten Betrag (K2) vermindert oder erhöht, wenn das elektrische Gerät (12) sich im ausgeschalteten Zustand befindet,
die das elektrische Gerät (12) in den ausgeschalteten Zustand schaltet, wenn der Zählerstand des Zählers (Z) einen ersten Grenzwert (OGR) erreicht oder überschreitet.

13. Einrichtung nach Anspruch 12, **dadurch gekennzeichnet,** daß die Einrichtung einen Prozessor (18) mit Steuersoftware enthält

14. Einrichtung nach einem der vorhergehenden Ansprüche, **dadurch gekennzeichnet,** daß die Einrichtung, nachdem sich das Gerät im ausgeschalteten Zustand befindet, das Wiedereinschalten nach Ablauf eines Zeitgliedes (T) gestattet.

15. Einrichtung nach einem der vorhergehenden Ansprüche, **dadurch gekennzeichnet,** daß die Einrichtung, nachdem sich das Gerät (12) im ausgeschalteten Zustand befindet, das Wiedereinschalten nach Erreichen oder Unterschreiten eines zweiten Grenzwertes (UGR) gestattet.

16. Einrichtung nach einem der vorhergehenden Ansprüche, **dadurch gekennzeichnet,** daß der erste Betrag (K1) und/oder der zweite Betrag (K2), um die der Zählerstand des Zählers (Z) erhöht oder vermindert bzw. vermindert oder erhöht werden, durch die Steuerung (18) angepaßt werden.

17. Einrichtung nach Anspruch 16, **dadurch gekennzeichnet,** daß die Anpassung der Beträge (K1, K2) abhängig vom Zählwert des Zählers (Z) erfolgt.

18. Einrichtung nach Anspruch 16, **dadurch gekennzeichnet,** daß die Anpassung der Beträge (K1, K2) abhängig vom Wert der Umgebungstemperatur (26) des elektrischen Gerätes (12) erfolgt.

19. Einrichtung nach Anspruch 16, **dadurch gekennzeichnet,** daß die Anpassung der Beträge abhängig vom Wert der Umgebungstemperatur (26) des elektrischen Gerätes (12) und abhängig vom Zählwert des Zählers (Z) erfolgt.

20. Einrichtung nach einem der vorhergehenden Ansprüche, **dadurch gekennzeichnet,** daß die Ansteuerung mehrerer elektrischer Geräte (12) in einer Einrichtung erfolgt, wobei für jedes elektrische Gerät (12) mindestens einen Zähler (Z) in der Einrichtung vorhanden ist.
